# EUROPEAN PATENT APPLICATION

(11) **EP 2 879 046 A1**
(43) Date of publication of application: **03.06.2015**
(21) Application number: 13804943.2
(22) Date of filing: 13.06.2013
(51) Int. Cl.: G06F 3/16

(54) **VOICE-ASSISTED EDITING METHOD AND DEVICE FOR TERMINAL**

(30) Priority: 26.07.2012 CN 201210260840
(71) Applicant: ZTE Corporation, Shenzhen, Guangdong 518057 (CN)
(72) Inventor: ZENG, Yiting, Shenzhen Guangdong Province 518057 (CN)
(74) Representative: Novagraaf Technologies
(86) International application number: PCT/CN2013/077128
(87) International publication number: WO 2013/185606

(57) **Abstract**

A voice-assisted editing method and device for a terminal is provided. The method includes: the terminal configuring a correspondence relationship between a user command and a tag, and saving the correspondence relationship in a configuration file, wherein the user command is stored in a form of text command; after receiving a voice command from the user, the terminal converting the voice command into a text command, searching in the configuration file for whether there is the text command, and when the text command is searched out in the configuration file, reading a tag corresponding to the text command and performing editing operations indicated by the tag. With the method and device provided in the embodiment of the present invention, the tedious steps of the user manually inputting and editing the text can be reduced, thereby greatly improving the user experience.

## Description

### Technical Field

The present invention relates to the field of communications, and more particularly, to a voice-assisted editing method and device for a terminal.

### Background of the Related Art

With the development of mobile communication technology and mobile phone manufacturing technology, a mobile phone with full touch screen is preferred by more and more users because of its ease of use and beautiful appearance, and it becomes a trend in the development of mobile phones.

Since the mobile phone with full touch screen does not have a physical keyboard in the traditional sense, all inputs are relying on the soft keyboard on the screen or clicking the touch screen for implementation. It is limited by the size and sensitivity of the screen, and when the user edits the text, there are still a lot of inconveniences. For example, when a user wants to input some symbols, especially those symbols that are not commonly used, while inputting Chinese, the inputs can only be performed after the panel where the symbols are located is found by constantly switching the keyboard panel, and after the inputs are completed, it also has to go through the constant switching to return to the previous Chinese panel, and this process consumes a lot of time of the user. For another example, when the user has edited a large section of text and wants to modify one of the words, the user has to continue to touch the touch screen, and move the cursor to the correct location after several attempts and then modify the word. Therefore manually inputting and editing text significantly degrades the user experience.

### Summary of the Invention

The embodiment of the present invention provides a voice-assisted editing method and device for a terminal, to remove tedious steps of the user manually inputting and editing the text, thereby greatly improving the user experience.

The embodiment of the present invention provides a voice-assisted editing method for a terminal, comprising:
the terminal configuring a correspondence relationship between a user command and a tag, and saving the correspondence relationship in a configuration file, wherein the user command is saved in a form of text command; and
after receiving a voice command from a user, the terminal converting the voice command to a text command and searching in the configuration file for whether there is the text command or not, reading a tag corresponding to the text command when the text command is searched out in the configuration file, and performing editing operations indicated by the tag.

Alternatively, the tag indicates one or more editing operations;
the step of the terminal configuring a correspondence relationship between a user command and a tag comprises: the terminal inputting a command via the touch screen, and then configuring a tag for the command, selecting editing operations indicated by the tag, or inputting a command by voice, then configuring a tag for the command through the touch screen, and selecting editing operations indicated by the tag.

Alternatively, the step of the terminal configuring a correspondence relationship between a user command and a tag comprises: the terminal configuring a format corresponding to the command and tag;
the format comprises: command + tag + editing operations indicated by the tag.

Alternatively, the method further comprises:
after receiving a voice command from the user, the terminal not performing editing operations when the text command is not searched out in the configuration file, and waiting for a next command from the user.

The embodiment of the present invention further provides a voice-assisted editing device for a terminal, comprising: a configuration module, a voice adaptation module, and an analyzing and editing module, wherein:
the configuration module is configured to: configure a correspondence relationship between a user command and a tag, save the correspondence relationship in a configuration file, wherein the user command is saved in a form of text command;
the voice adaptation module is configured to: receive a voice command from a user, convert the voice command into a text command, and send the text command to the analyzing and editing module; and
the analyzing and editing module is configured to: search in the configuration file for whether there is the text command after receiving the text command sent by the voice adaptation module, read a tag corresponding to the text command when the text command is searched out in the configuration file, and perform editing operations indicated by the tag.

Alternatively, the tag indicates one or more editing operations;
the configuration module is configured to configure a correspondence relationship between a user command and a tag in a following way: inputting a command via a touch screen, then configuring a tag for the command, and selecting editing operations indicated by the tag, or inputting a command by voice, then configuring a tag for the command through the touch screen, and selecting editing operations indicated by the tag.

Alternatively, the configuration module is configured to: configure a format corresponding to the command and tag;
the format comprises: command + tag + editing operations indicated by the tag.

Alternatively, the analyzing and editing module is further configured to: after receiving the text command sent by the voice adaptation module, not execute editing operations when the text command is not searched out in the configuration file, and wait for a next command of the user sent by the voice adaptation module.

Alternatively, the device further comprises a voice enabling module, wherein:
the voice enabling module is configured to: set an enabling mode of voice-assisted editing;
the enabling mode comprises: setting a button for the user to enable a voice-assisted editing function, or setting to automatically enable the voice-assisted editing function following the pop-up of an input method panel.

With the voice-assisted editing method and device for a terminal provided in the embodiments of the present invention, the tedious steps of the user manually inputting and editing the text can be reduced, thereby greatly improving the user experience.

### Brief Description of the Drawings

FIG. 1 is a structural diagram of a voice-assisted editing device for a terminal in accordance with an embodiment.
FIG. 2 is a flow chart of a voice-assisted editing method for a terminal in accordance with an embodiment.

### Preferred Embodiments of the Invention

Hereinafter in conjunction with the accompanying drawings, the embodiments of the present invention will be described in detail. It should be noted that, in the case of no conflict, the embodiments of the present application and features in the embodiments may be arbitrarily combined with each other.

### Embodiment

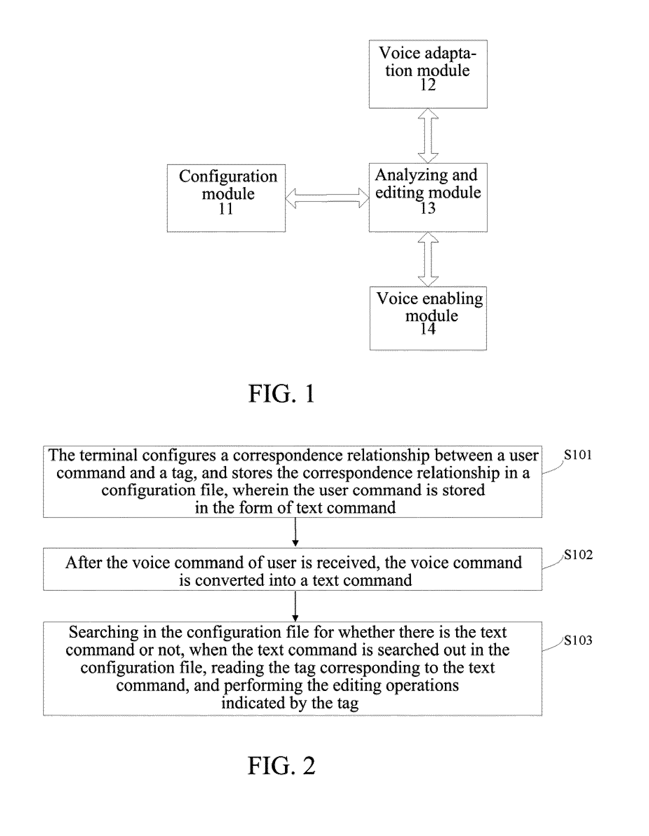

As shown in FIG. 1, the present embodiment provides a voice-assisted editing device for a terminal, comprising: a configuration module 11, a voice adaptation module 12, and an analyzing and editing module 13.

The configuration module 11 is configured to: configure a correspondence relationship between a user command and a tag, and save the correspondence relationship in a configuration file, wherein the user command is saved in the form of text command;
wherein the system presets a series of standardized tags, and each tag indicates one or more editing operations; the configuration module inputs a command via the touch screen and then configures a corresponding tag for the command, and it selects editing operations indicated by the tag, or the configuration module inputs a command by voice and then configures a corresponding tag for the command via the touch screen, and it selects editing operations indicated by the tag.

The configuration module 11 is further configured to: configure a format corresponding to the command and tag, wherein the format comprises: command + tag + editing operations indicated by the tag.

The voice adaptation module 12 is configured to: receive a voice command from the user and convert the voice command into a text command and send the text command to the analyzing and editing module 13;
wherein the voice adaptation module 12 adapts different voice engines simultaneously, so as to be convenient to change different voice recognition engines at any time.

The analyzing and editing module 13 is configured to: after receiving the text command sent by the voice adaptation module, search in the configuration file for whether there is the text command or not, and read the tag corresponding to the text command and perform the editing operations indicated by the tag when the text command is searched out in the configuration file.

The analyzing and editing module 13 is further configured to: after receiving the text command sent by the voice adaptation module, not perform editing operations when the text command is not searched out in the configuration file, and wait for a next command of the user sent by the voice adaptation module 12.

The device further comprises a voice enabling module 14, and the voice enabling module 14 is configured to: set an enabling mode of the voice-assisted editing;
the enabling mode comprises: setting a button for the user to enable the voice-assisted editing function, or setting to automatically enable the voice-assisted editing function following the pop-up of the input method panel. Therefore the user can easily enable the voice editing function when editing the relationship between the command and the tag in the configuration file as well as performing the voice editing.

As shown in FIG. 2, the present embodiment provides a voice-assisted editing method for a terminal, comprising the following steps.

In step S101, the terminal configures a correspondence relationship between a user command and a tag, and stores the correspondence relationship in a configuration file, wherein the user command is stored in the form of text command.

In step S102, after receiving a voice command from the user, the terminal converts the voice command into a text command.

The terminal adapts various types of voice engines to convert the voice into the text.

In step S103, whether there is the text command is searched for in the configuration file, and the tag corresponding to the text command is read when the text command is searched out in the configuration file, and the editing operations indicated by the tag are performed.

In step S101, the system presets a series of standardized tags for the user to perform the configuration, wherein each tag represents one or more editing operations and each tag corresponds to the API (Application Programming Interface) provided by the terminal platform, in order to achieve the operation of the platform.

For example, the tag UP represents moving the cursor upward by one or a few lines, the tag LEFT represents moving the cursor to the left by one or more bits, the tag DEL represents deleting, and the tag INPUT represents inputting, and so on.

The step of the terminal configuring a correspondence relationship between a user command and a tag comprises: the terminal inputting a command via the touch screen, then configuring a corresponding tag for the command, and selecting editing operations indicated by the tag, or inputting a command by voice, then configuring a corresponding tag for the command through the touch screen, and selecting editing operations indicated by the tag.

In addition, as an alternative, the present embodiment further provides a format corresponding to the command and tag, and the format comprises: command + tag + editing operations indicated by the tag.

For example, during the configuration, the user says a command "comma", then a series of tags are popped up on the display interface, and the tag INPUT is configured and input for the command, and a format corresponding to the "comma" command and tag is generated: [comma] {INPUT (,)} is generated, indicating that when receiving the voice command "comma" said by the user, the system automatically inputs the symbol ",".

For another example, during the configuration, the user says a command "left", then a series of tags are popped up on the display interface, and the tag LEFT is configured and input for the command, and the editing operations indicated by the tag are selected, for example, left shifting by three bits, the format corresponding to the command "Left" and tag is generated: [Left] {LEFT(3)}, indicating that the system moves the cursor to the left by three bits when receiving the voice command "left" said by the user.

The user can configure a plurality of commands in accordance with the abovementioned rules, and save them in a configuration file. In addition, the command can also be Chinese characters, words and numbers freely defined by the user, which gives the user a great degree of freedom.

The format corresponding to the command and tag can even be configured as: [etc.] {LEFT (2)}, indicating moving the cursor to the left by 2 bits when the user says the command "etc.".

Furthermore, in step S103, after receiving a voice command from the user, editing operations are not performed when the text command is not searched out in the configuration file, and the next command of the user is waited.

From the abovementioned embodiment, it can be seen that, with respect to the related art, the voice-assisted editing method and device for a terminal provided in the abovementioned embodiment can be used to reduce the tedious steps of the user manually inputting and editing the text, thereby greatly improving the user experience.

Those ordinarily skilled in the art can understand that all or some of steps of the abovementioned method may be completed by the programs instructing the relevant hardware, and the programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

### Industrial Applicability

With the voice-assisted editing method and device for a terminal provided in the embodiments of the present invention, the tedious steps of the user manually inputting and editing the text can be reduced, thereby greatly improving the user experience.

## Claims

1. A voice-assisted editing method for a terminal, comprising:
the terminal configuring a correspondence relationship between a user command and a tag, and saving the correspondence relationship in a configuration file, wherein the user command is saved in a form of text command; and
after receiving a voice command from a user, the terminal converting the voice command into a text command and searching in the configuration file for whether there is the text command or not, reading a tag corresponding to the text command when the text command is searched out in the configuration file, and performing editing operations indicated by the tag.

2. The method of claim 1, wherein
the tag indicates one or more editing operations;
the step of the terminal configuring a correspondence relationship between a user command and a tag comprises: the terminal inputting a command via a touch screen, and then configuring a tag for the command, and selecting editing operations indicated by the tag, or inputting a command by voice, then configuring a tag for the command through the touch screen, and selecting editing operations indicated by the tag.

3. The method of claim 2, wherein:
the step of the terminal configuring a correspondence relationship between a user command and a tag comprises: the terminal configuring a format corresponding to the command and tag;
the format comprises: command + tag + editing operations indicated by the tag.

4. The method of claim 1, further comprising:
after receiving a voice command from the user, the terminal not performing editing operations when the text command is not searched out in the configuration file, and waiting for a next command of the user.

5. A voice-assisted editing device for a terminal, comprising: a configuration module, a voice adaptation module and an analyzing and editing module, wherein:
the configuration module is configured to: configure a correspondence relationship between a user command and a tag and save the correspondence relationship in a configuration file, wherein the user command is saved in a form of text command;
the voice adaptation module is configured to: receive a voice command from a user, convert the voice command into a text command and send the text command to the analyzing and editing module; and
the analyzing and editing module is configured to: search in the configuration file for whether there is the text command after receiving the text command sent by the voice adaptation module, read a tag corresponding to the text command when the text command is searched out in the configuration file, and perform editing operations indicated by the tag.

6. The device of claim 5, wherein:
the tag indicates one or more editing operations;
the configuration module is configured to configure a correspondence relationship between a user command and a tag in a following way: inputting a command via a touch screen, then configuring a tag for the command, and selecting editing operations indicated by the tag, or inputting a command by voice, then configuring a tag for the command via the touch screen, and selecting editing operations indicated by the tag.

7. The device of claim 6, wherein:
the configuration module is configured to: configure a format corresponding to the command and tag;
the format comprises: command + tag + editing operations indicated by the tag.

8. The device of claim 5, wherein:
the analyzing and editing module is further configured to: after receiving the text command sent by the voice adaptation module, not execute editing operations when the text command is not searched out in the configuration file, and wait for a next command of the user sent by the voice adaptation module.

9. The device of claim 5, further comprising a voice enabling module, wherein:
the voice enabling module is configured to: set an enabling mode of voice-assisted editing;
the enabling mode comprises: setting a button for the user to enable a voice-assisted editing function, or setting to automatically enable the voice-assisted editing function following a pop-up of an input method panel.
